# EUROPEAN PATENT SPECIFICATION

(11) **EP 0 416 183 B1**
(45) Date of publication and mention of the grant of the patent: **06.04.1994**
(21) Application number: 89309143.9
(22) Date of filing: 08.09.1989
(51) Int. Cl.: F16B 13/06

(54) **Anchor-fixing**
Ankerbefestigung
Fixation d'ancrage

(43) Date of publication of application: 13.03.1991
(73) Proprietor: KABUSHIKI KAISHA MIYANAGA, Miku 673-04 (JP)
(72) Inventor: Miyanaga, Masaaki, Ashiya 659 (JP)
(74) Representative: West, Alan Harry

(56) References cited:
- EP-A- 0 297 228
- FR-A- 2 176 390
- GB-A- 2 106 209

## Description

This invention relates to an improved anchor fixing of the type which is secured in a hole formed in a material such as concrete, the hole having an undercut at its bottom.

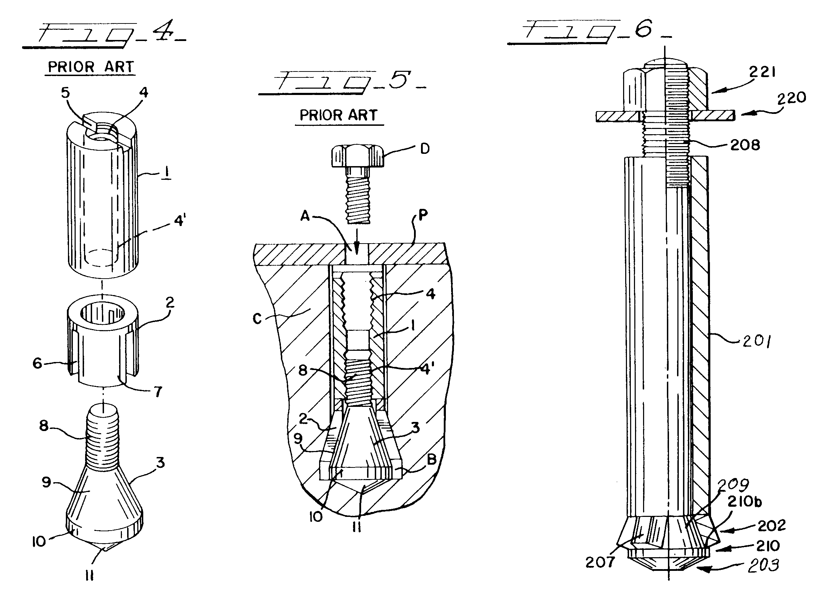

To fasten an object to a hard surface, such as a concrete wall, an anchor is first secured to the hard surface and then the object is fastened to the anchor. Several types of anchors have been proposed in the past, one of which is shown in Figure 4 of the accompanying drawings. As shown therein, the anchor is made up of a tubular main sleeve 1, through the center of which is a hole with internal threads 4 and 4'. The sleeve 1 has a groove or slot 5 for engagement by the blade of a screwdriver formed in its outer end surface. The anchor further includes an expansion sleeve 2 which has a number of lengthwise slits 6 cut into it to form a number of expansion fingers 7. A bolt 3 including a threaded shank 8 at its upper end is passed through the expansion sleeve 2 to engage with the threaded hole 4' at the bottom end of the main sleeve 1. The bolt also includes a generally conical head 9 having a cylindrical surface at its lower wider end and a conical bottom surface 11.

Fig. 5 illustrates the manner in which such an anchor is used. A hole A is drilled into a concrete body C such as a ceiling or wall of a building, and the bolt 3 and the expansion sleeve 2 are inserted into the undercut B of the hole. The expansion sleeve 2 is expanded over the conical surface of the head 9 of the bolt 3 by positioning a tubular striking bar (not shown) on the upper end of the sleeve 2 and striking the bar with a hammer from outside the hole. The main sleeve 1 is then inserted into the hole and screwed on and thereby fixed to the bolt 3 with a screwdriver. A structure P or other object can then be fitted by screwing a bolt D into the hole and engaging the internal thread 4 at the outer end of the main sleeve 1.

However, with such a conventional bolt 3 as described above, there is a real danger of the bolt being pulled out by an external force applied to the bolt 3 via the main sleeve 1. If the force is sufficient, it can cause the conical surface of the head 9 of the bolt 3 to slide inside the expansion sleeve 2, allowing the bolt 3 to be pulled out and, of course, adversely affecting its reliability.

The anchor fixing described in GB-A-2106209 goes some way to avoiding such problems by having an outwardly extending flange at the widest part of the conical head of the bolt, the surface of the flange and the abutting surface of the expansion fingers of the expansion sleeve being perpendicular to the main axis of the bolt. Such an arrangement largely prevents the head of the bolt sliding within the expansion sleeve but has not proved entirely satisfactory in practice.

The present invention seeks to provide an anchor fixing of the type described generally in GB-A-2106209 but which features even greater reliability. According to the invention, there is now provided an anchor fixing adapted for fastening in an undercut hole, the fixing comprising
a bolt which includes a shank, a conical head adapted to be anchored in the undercut and a peripheral lip extending radially from the conical head and
an expansion sleeve adapted to pass over the shank and including at its forward end a plurality of expansion fingers,
the arrangement being such that in use with the bolt located in an undercut hole with the conical head situated within the undercut, the expansion sleeve can be positioned around the shank and driven down so that the expansion fingers splay around the conical head of the bolt beneath the undercut and into abutment with the radial lip to fasten the bolt within the undercut hole, characterised in that the abutting surfaces of the expansion fingers and of the radial lip are substantially parallel and substantially normal to the adjacent conical surface of the head of the bolt.

Accordingly, when an external force is applied to the bolt in an attempt to pull it out of a hole in a concrete surface for example, the radial lip comes into positive abutment with the lower end of the expansion sleeve, thereby preventing the bolt from being pulled out.

The invention will be better understood from the following detailed description taken in conjunction with the accompanying drawings, wherein:
Fig. 1 is an exploded perspective view of an anchor of the inner thread type including an anchor bolt according to this invention;
Fig. 2 is a sectional view showing the assembled structure fitted in the expanded-diameter hole;
Fig. 3 is an enlarged view of parts of the structure;
Figs. 4 and 5 show a prior art construction; and
Fig. 6 shows an anchor of the external thread type, including structure in accordance with the invention.

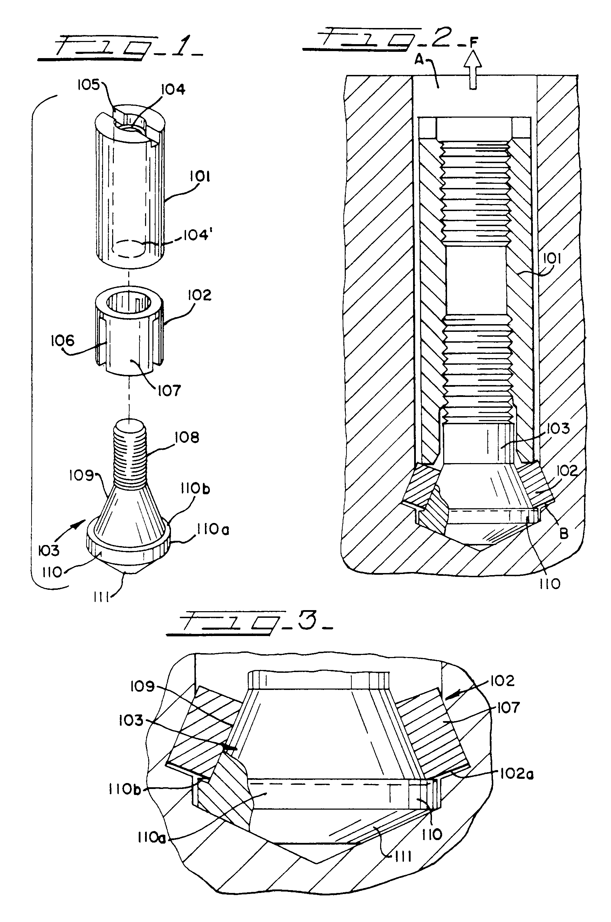

As shown in Fig. 1, the main sleeve 101 and the expansion sleeve 102 have the same construction as in the conventional anchor bolt shown in Figs. 5 and 6. The main sleeve 101 has internal threads 104, 104' passing through it and a groove or slot 105 for engagement by the blade of a screwdriver in its outer end; the expansion sleeve 102 abuts the main sleeve 101 and has a number of slits 106 in it forming a number of expansion fingers 107.

Furthermore, the bolt 103 is comprised of a threaded shank 108 at its upper end, which engages with the internal thread 104' of the main sleeve 101, and a conical head 109 below the shank 108.

Extending from the conical head 109 there is formed a peripheral lip 110b being the upper surface of a protrusion 110 which projects from the lower end of the head 109. Furthermore, the peripheral lip 110b is formed with an inclined surface which is substantially normal to the adjacent surface of the conical head 109. This peripheral lip 110b may be intermittent but preferably extends around the whole circumference of the protrusion 110, so as to abut the expansion sleeve 102 as described below. Since the inclined surface of the lip 110b is approximately perpendicular to the adjacent conical surface of the head 109, it is more or less parallel to the lower end surfaces 102a of the expansion fingers 107 of the expansion sleeve 102 so as to ensure a large contact area with the expansion fingers 107 of the sleeve 102. The lower tapered surface of the bolt 103 is indicated by the numeral 111, and the outer cylindrical surface of the protrusion 110 is indicated by the numeral 110a.

In Fig. 2, where the anchor is shown fitted in a hole A, the expansion sleeve 102 is pressed to and secured by the wall of the undercut B of hole A. Here, if an external upward force F is applied to the sleeve 101 of the anchor, it would pull the embedded bolt 103 upwardly. But, as shown in Fig. 3, the upper surface of the lip 110b abuts and is held against the lower end of the expansion sleeve 102 (the expansion fingers 107), thereby preventing the bolt from being pulled out of the hole.

Since the surface of the lip 110b is formed parallel to the lower end surface of the expansion fingers 107, the upper surface of the lip 110b comes into complete contact with the fingers, thereby being securely engaged with the lower end of the expansion sleeve 102.

Fig. 6 shows the anchor fixing of the invention applied to an external screw type of anchor. This type of anchor includes a bolt 203 having a long shank. An external thread 208 is formed on the upper end of the shank, and a conical head 209 is formed at the lower end. A cylindrical protrusion 210 having a peripheral lip 210b is also formed on the head, similar to the shape of the bolt 103. The anchor further includes an elongated tubular sleeve 201, the lower end of which abuts an expansion sleeve 202 including a plurality of expansion fingers 207. A washer 220 and a nut 221 are positioned on the upper end of the bolt 203.

In use, the bolt is first positioned in a hole and the sleeves 202 and 201 are slid into the hole and around the shank. When the nut 221 is tightened, the nut and the washer 220 press the sleeves 202 and 201 downwardly relative to the bolt, thereby causing the fingers 207 to expand as described in connection with Figs. 1 to 3. The nut 221 may then be removed in order to fasten another object (not illustrated) to the anchor. The lip 210b engages the bottom ends of the fingers 207 to prevent the bolt from being pulled out of the hole.

As is clear from the above description and the drawings, even if an upwardly directed external force is applied to an anchor according to this invention when secured in a undercut hole, the peripheral lip (110b, 210b) of the protusion (110,210) comes into contact and is engaged with the lower end of the pieces of the expansion sleeves (102, 202), so that the embedded bolt cannot be pulled out. As a consequence, an object can be mounted and fixed securely by using such an anchor bolt, with the continued reliability of the anchor bolt being assured.

## Claims

1. An anchor fixing adapted for fastening in an undercut hole, the fixing comprising
a bolt (103) which includes a shank (108), a conical head (109) adapted to be anchored in the undercut and a peripheral lip (110b) extending radially from the conical head and
an expansion sleeve (102) adapted to pass over the shank and including at its forward end a plurality of expansion fingers (107),
the arrangement being such that in use with the bolt located in an undercut hole with the conical head situated within the undercut, the expansion sleeve can be positioned around the shank and driven down so that the expansion fingers splay around the conical head of the bolt beneath the undercut and into abutment with the radial lip to fasten the bolt within the undercut hole, characterised in that the abutting surfaces of the expansion fingers and of the radial lip are substantially parallel and substantially normal to the adjacent conical surface of the head of the bolt.

2. An anchor fixing according to claim 1, wherein the radial lip extends around the whole periphery of the conical head of the bolt.

## Patentansprüche

1. Ankerbefestigung zur Befestigung in einer hinterschnittenen Bohrung, mit
einem Bolzen (103), der einen Schaft (108), einen in der Hinterschneidung zu verankernden, konischen Kopf (109) und einen vom konischen Kopf radial abstehenden Außenbund (110b) aufweist, und
einer über den Schaft zu schiebenden Ausdehnungsmuffe (102), die an ihrem vorderen Ende eine Mehrzahl von Spreizfingern (107) aufweist, wobei der Bolzen bei Gebrauch in einer hinterschnittenen Bohrung und der konische Kopf in der Hinterschneidung zu stehen kommen und die Ausdehnungsmuffe auf dem Bolzen nach unten verschiebbar ist, so daß sich die Spreizfinger um den konischen Kopf des Bolzens in die Hinterschneidung und bis zu einem Kontakt mit dem Außenbund spreizen und den Bolzen in der hinterschnittenen Bohrung verankern, **dadurch gekennzeichnet,** daß im Einbauzustand die Anschlagflächen der Spreizfinger und des Außenbunds im wesentlichen parallel zueinander und normal zu der angrenzenden konischen Fläche des Kopfes des Bolzens stehen.

2. Ankerbefestigung nach Anspruch 1, **dadurch gekennzeichnet,** daß sich der Außenbund über den gesamten Umfang des konischen Kopfes des Bolzens erstreckt.

## Revendications

1. Fixation à ancrage adaptée pour être bloquée dans un perçage à contre-dépouille, la fixation comprenant:
un bouton (103) qui comporte une tige (108), une tête conique (109) conçue pour être ancrée dans la contre-dépouille et un épaulement périphérique (110b) qui s'étend radialement sur la tête conique et
une douille à expansion (102) apte à être engagée autour de la tige et comportant, à son extrémité avant, plusieurs doigts expansibles (107),
l'agencement étant tel qu'en cours d'utilisation, lorsque le bouton est logé dans un perçage à contre-dépouille, avec sa tête conique située à l'intérieur de la contre-dépouille, la douille à expansion peut être mise en place autour de la tige et entraînée vers le fond, pour que les doigts expansibles se déploient autour de la tête conique du boulon, sous la contre-dépouille, et viennent en butée contre l'épaulement radial afin d'immobiliser le bouton à l'intérieur du perçage à contre-dépouille, caractérisée en ce que les surfaces de butée des doigts expansibles et de l'épaulement radial sont sensiblement parallèles entre elles et sensiblement normales à la surface conique adjacente de la tête du boulon.

2. Fixation à ancrage selon la revendication 1, dans laquelle l'épaulement radial s'étend sur la totalité du pourtour de la tête conique du bouton.
